# EUROPEAN PATENT SPECIFICATION

(11) **EP 0 770 112 B1**
(45) Date of publication and mention of the grant of the patent: **21.04.1999**
(21) Application number: 95923510.2
(22) Date of filing: 06.07.1995
(51) Int. Cl.: C09K 5/04

(54) **REFRIGERANT COMPOSITIONS**
KÜHLMITTELZUSAMMENSETZUNGEN
COMPOSITIONS REFRIGERANTES

(30) Priority: 13.07.1994 GB 9414110
(43) Date of publication of application: 02.05.1997
(73) Proprietor: IMPERIAL CHEMICAL INDUSTRIES PLC, London SW1P 3JF (GB)
(72) Inventor: POWELL, Richard, Llewellyn, Tarporley Cheshire CW6 9NV (GB); CORR, Stuart, Warrington Cheshire WA4 5DH (GB); MURPHY, Frederick, Thomas, Cheshire WA6 7RY (GB); MORRISON, James, David, Northwich Cheshire CW8 2QN (GB)
(74) Representative: Dee, Ian Mark
(86) International application number: GB9501593
(87) International publication number: WO9602604

(56) References cited:
- EP-A- 0 299 614
- WO-A-93/14174
- WO-A-94/17153
- DE-A- 4 116 274
- US-A- 5 340 490

## Description

The present invention relates to non-azeotropic refrigerant compositions which boil over a temperature range and thus provide temperature glides in the heat exchangers of the heat transfer devices in which they are used.

Heat transfer devices of the mechanical compression type such as refrigerators, freezers, heat pumps and air conditioning systems are well known. In such devices a refrigerant liquid of a suitable boiling point evaporates at low pressure taking heat from a surrounding heat transfer fluid. The resulting vapour is then compressed and passes to a condenser where it condenses and gives off heat to another heat transfer fluid. The condensate is then returned through an expansion valve to the evaporator so completing the cycle. The mechanical energy required for compressing the vapour and pumping the liquid may be provided by an electric motor or an internal combustion engine.

In addition to having a suitable boiling point and a high latent heat of vaporisation, the properties preferred of a refrigerant include low toxicity, non-flammability, non-corrosivity, high stability and freedom from objectionable odour.

Hitherto, heat transfer devices have tended to use fully and partially halogenated chlorofluorocarbon refrigerants such as trichlorofluoromethane (Refrigerant R-11), dichlorodifluoromethane (Refrigerant R-12), chlorodifluoromethane (Refrigerant R-22) and the azeotropic mixture of chlorodifluoromethane and chloropentafluoroethane (Refrigerant R-115); the azeotrope being Refrigerant R-502. Refrigerant R-22, for example, is widely used in air conditioning systems.

However, the fully and partially halogenated chlorofluorocarbons have been implicated in the destruction of the earth's protective ozone layer and as a result the use and production thereof has been limited by international agreement.

Whilst heat transfer devices of the type to which the present invention relates are essentially closed systems, loss of refrigerant to the atmosphere can occur due to leakage during operation of the equipment or during maintenance procedures. It is important, therefore, to replace fully and partially halogenated chlorofluorocarbon refrigerants by materials having low or zero ozone depletion potentials.

In addition to the possibility of ozone depletion, it has been suggested that significant concentrations of chlorofluorocarbon refrigerants in the atmosphere might contribute to global warming (the so-called greenhouse effect). It is desirable, therefore, to use refrigerants which have relatively short atmospheric lifetimes as a result of their ability to react with other atmospheric constituents such as hydroxyl radicals.

Replacements for some of the chlorofluorocarbon refrigerants presently in use have already been developed. These replacement refrigerants tend to comprise selected hydrofluoroalkanes, i.e. compounds which contain only carbon, hydrogen and fluorine atoms in their structure. Thus, refrigerant R-12 is generally being replaced by 1,1,1,2-tetrafluoroethane (R-134a).

Although suitable replacement refrigerants are available, it could be beneficial in certain heat transfer devices to replace the chlorofluorocarbon refrigerant with a non-azeotropic refrigerant blend which not only exhibits a low or zero ozone depletion potential but which also boils over a reasonably wide temperature range, since in this way the energy efficiency (coefficient of performance) of the device may be increased leading to a reduction in indirect global warming.

The present invention provides a non-azeotropic refrigerant composition which comprises a mixture of compounds having low or zero ozone depletion potentials. The non-azeotropic refrigerant composition ofthe invention can boil over a wide temperature range and this property can be exploited to increase the energy efficiency of the equipment in which the composition is used. Furthermore, the temperature range over which the refrigerant composition of the invention boils, i.e. the so-called temperature glide, can be adjusted by appropriate selection of the components and the amounts thereof forming the composition and in this way it is possible to tailor the composition to its intended application.

According to the present invention there is provided a non-azeotropic (zeotropic) refrigerant composition comprising:
(A) a first component comprising at least one compound selected from the group consisting of carbon dioxide (CO₂) and fluoromethane (R-41);
(B) a second component comprising at least one compound selected from the group consisting of the hydrofluorocarbons and the hydrofluorocarbon ethers; and
(C) a third component comprising at least one hydrocarbon,
wherein the boiling point of the second component is at least 15°C higher than the sublimation temperature of the carbon dioxide (CO₂) and/or the boiling point of the fluoromethane (R-41) making up the first component.

The zeotropic refrigerant composition ofthe invention comprises first, second and third components. The second component (component (B)) has a boiling point which is at least 15°C higher than the sublimation temperature ofthe CO₂ and/or boiling point of the R-41 making up the first component (component (A)) so that the refrigerant composition of the invention tends to boil and condense over a temperature range, i.e. it exhibits a temperature glide in both the evaporator and condenser.

The first component (component (A)) comprises at least one compound selected from CO₂ and R-41. Both of these compounds have a low temperature refrigeration action, with CO₂ subliming at around -78.5°C and R-41 having a boiling point of around -78.4 °C. Although the first component may contain a mixture of CO₂ and R-41, it will preferably contain just one of these compounds and more preferably will contain just CO₂.

The second component (component (B)) comprises at least one compound selected from the group consisting of the hydrofluorocarbons and hydrofluorocarbon ethers. The hydrofluorocarbons and hydrofluorocarbon ethers which may be used for the second component are somewhat limited since the second component must have a boiling point which is at least 15°C higher than the sublimation temperature of the CO₂ and/or boiling point of the R-41 making up the first component. Preferably, the boiling point of the second component is at least 25°C higher and more preferably at least 35°C higher than the sublimation temperature of the CO₂ and/or boiling point ofthe R-41.

Suitable hydrofluorocarbons and hydrofluorocarbon ethers for the second component may be selected from the group consisting of difluoromethane, pentafluoroethane, 1,1,1-trifluoroethane, trifluoromethyl difluoromethyl ether, 1,1-difluoroethane, 1,1,1,2,3,3,3-heptafluoropropane, 1,1,1,2,2,3,3-heptafluoropropane, 1,1,1,2,2-pentafluoropropane, 1,1,2,2-tetrafluoroethane, 1,1,1,2-tetrafluoroethane, 1,1,1,2,3,3-hexafluoropropane, 1,1,1,2,2,3-hexafluoropropane, 1,1,1,3,3,3-hexafluoropropane, 1,1,2,2,3,3-hexafluoropropane, 1,1,2-trifluoroethane, 1,1,2,2-tetrafluoropropane, pentafluoroethyl difluoromethyl ether, 1,1,1,2-tetrafluoroethyl trifluoromethyl ether, trifluoromethyl methyl ether, trifluoromethyl fluoromethyl ether, bis(difluoromethyl) ether, pentafluoroethyl methyl ether and 1,1,2,2-tetrafluoroethyl trifluoromethyl ether.

The second component may consist of a single refrigerant compound or it may comprise a mixture of such compounds, for example an azeotropic or azeotrope-like mixture. In a preferred embodiment, the second component comprises at least one hydrofluorocarbon selected from the group consisting of 1,1,1,2-tetrafluoroethane (R-134a), difluoromethane (R-32), pentafluoroethane (R-125) and 1,1,1-trifluoroethane (R-143a), and in a particularly preferred embodiment the second component is 1,1,1,2-tetrafluoroethane (R-134a) or a mixture of 1,1,1,2-tetrafluoroethane (R-134a) and at least one of difluoromethane (R-32) and pentafluoroethane (R-125).

The third component (component (C)) of the refrigerant composition comprises at least one hydrocarbon. Suitable hydrocarbons for the third component are those containing from 2 to 6 carbon atoms, with hydrocarbons containing from 3 to 5 carbon atoms being preferred. In a particularly preferred embodiment, the third component comprises at least one hydrocarbon selected from propane and pentane.

The amounts of the first, second and third components in the refrigerant composition may be varied within wide limits, but typically the refrigerant composition will comprise from 2 to 45 % by weight of the first component (component (A)), from 45 to 97 % by weight of the second component (component (B)) and from 1 to 15 % by weight of the third component (component (C)). Preferably, the refrigerant composition will comprise from 2 to 35 % by weight of the first component, from 60 to 97 % by weight of the second component and from 1 to 10 % by weight of the third component.

A preferred refrigerant composition of the invention is one comprising from 2 to 20 % by weight ofthe first component, from 70 to 97 % by weight of the second component and from 1 to 10 % by weight ofthe third component.

A particularly preferred refrigerant composition of the invention is one comprising from 2 to 15 % by weight, more particularly from 5 to 10 % by weight, of the first component, from 75 to 97 % by weight, more particularly from 85 to 93 % by weight, of the second component and from 1 to 10 % by weight, more particularly from 2 to 10 % by weight, of the third component.

The refrigerant composition of the invention may be used in combination with the types of lubricants which have been specially developed for use with hydrofluorocarbon based refrigerants. Such lubricants include those comprising a polyoxyalkylene glycol base oil. Suitable polyoxyalkylene glycols include hydroxyl group initiated polyoxyalkylene glycols, e.g. ethylene and/or propylene oxide oligomers/polymers initiated on mono- or polyhydric alcohols such as methanol, butanol, pentaerythritol and glycerol. Such polyoxyalkylene glycols may also be end-capped with suitable terminal groups such as alkyl, e.g. methyl groups. Another class of lubricants which have been developed for use with hydrofluorocarbon based refrigerants and which may be used in combination with the present refrigerant compositions are those comprising a neopentyl polyol ester base oil derived from the reaction of at least one neopentyl polyol and at least one aliphatic carboxylic acid or an esterifiable derivative thereof. Suitable neopentyl polyols for the formation of the ester base oil include pentaerythritol, polypentaerythritols such as di- and tripentaerythritol, trimethylol alkanes such as trimethylol ethane and trimethylol propane, and neopentyl glycol. The esters may be formed with linear and/or branched aliphatic carboxylic acids, such as linear and/or branched alkanoic acids. Preferred acids are selected from the C₅₋₈, particularly the C₅₋₇ linear alkanoic acids and the C₅₋₁₀, particularly the C₅₋₉, branched alkanoic acids. A minor proportion of an aliphatic polycarboxylic acid, e.g. an aliphatic dicarboxylic acid, may also be used in the synthesis of the ester in order to increase the viscosity thereof. Usually, the amount of the carboxylic acid(s) which is used in the synthesis will be sufficient to esterify all of the hydroxyl groups contained in the polyol, although residual hydroxyl functionality may be acceptable.

The refrigerant composition of the invention may also be used in combination with a mineral oil or alkyl benzene type lubricant. The hydrocarbon which is contained in the refrigerant composition of the invention tends to dissolve in the mineral oil or alkyl benzene lubricant and this property can allow the refrigerant composition to transport such a lubricant around a heat transfer device and return it to the compressor.

The single fluid refrigerants and azeotropic refrigerant blends which are used in conventional heat transfer devices boil at a constant temperature in the evaporator under constant pressure conditions, and so produce an essentially constant temperature profile across the evaporator. The temperature of the heat transfer fluid being cooled, which may be air or water for example, drops fairly rapidly on first contacting the cold surfaces provided by the refrigerant evaporating in the evaporator owing to the large difference in temperature between that fluid and the evaporating refrigerant. However, since the temperature of the heat transfer fluid is progressively reduced as it passes along the length of the evaporator, there is a progressive reduction in the temperature differential between the fluid and the evaporating refrigerant and a consequent reduction in the heat transfer or cooling rate.

In contrast, the refrigerant composition of the invention is a non-azeotropic (zeotropic) composition which boils over a temperature range under constant pressure conditions so as to create a temperature glide in the evaporator which can be exploited to reduce the energy required to operate the heat transfer device, e.g. by making use of the Lorentz cycle. One technique for exploiting the temperature glide involves the use of a heat transfer device equipped with a counter current flow evaporator and/or condenser in which the refrigerant and the heat transfer fluid are caused to flow counter currently to each other. With such an arrangement, it is possible to minimise the temperature difference between the evaporating and condensing refrigerant whilst maintaining a sufficiently high temperature difference between the refrigerant and the external fluid(s) to cause the required heat transfer to take place.

The consequence of minimising the temperature difference between the evaporating and condensing refrigerant in the same system is that the pressure difference is also minimised. As a result, the overall energy efficiency of the system is improved as less energy is consumed to bring about the refrigerant pressure rise from evaporator to condenser conditions.

The zeotropic refrigerant composition of the present invention may be used to provide the desired cooling in heat transfer devices such as air conditioning and low temperature refrigeration systems by a method which involves condensing the refrigerant composition and thereafter evaporating it in a heat exchange relationship with a heat transfer fluid to be cooled. In particular, the refrigerant composition of the invention may be usefully employed as a replacement for refrigerant R-22.

The present invention is now illustrated but not limited with reference to the following examples.

### Example 1

The performance of five refrigerant compositions of the invention in a refrigeration cycle of the type prevailing in an air conditioning system was evaluated using standard refrigeration cycle analysis techniques in order to assess the suitability thereof as a replacement for R-22. The operating conditions which were used for the analysis were chosen as being typical of those conditions which are found in an air conditioning system, and counter current flow at the heat exchangers was assumed.

In order to illustrate the benefit of the zeotropic refrigerant compositions of the invention in terms of their improved energy efficiency, it was first necessary to define the inlet and outlet temperatures ofthe heat transfer fluids at each heat exchanger (evaporator and condenser). The temperatures in the evaporator and condenser, assuming that a single fluid refrigerant was used in the cycle, were then chosen and these temperatures together with the inlet and outlet temperatures ofthe heat transfer fluids referred to above were used to determine a target log mean temperature difference for each heat exchanger. In the cycle analysis itself, the refrigerant inlet and outlet temperatures at both the evaporator and condenser were adjusted until the target log mean temperature difference was achieved for each heat exchanger. When the target log mean temperature difference for each heat exchanger was achieved, the various properties of the refrigerant composition in the cycle were recorded.

The following refrigerant compositions were subjected to the cycle analysis:
(1) A composition comprising 5 % by weight CO₂, 93 % by weight R-134a and 2 % by weight propane (R-290).
(2) A composition comprising 5 % by weight CO₂, 90 % by weight R-134a and 5 % by weight propane (R-290).
(3) A composition comprising 5 % by weight CO₂, 85 % by weight R-134a and 10 % by weight propane (R-290).
(4) A composition comprising 10 % by weight CO₂, 88 % by weight R-134a and 2 % by weight propane (R-290).
(5) A composition comprising 9 % by weight CO₂, 86 % by weight R-134a and 5 % by weight propane (R-290).

The following operating conditions were used in the cycle analysis.

| EVAPORATOR: | |
|---|---|
| Evaporator Temperature: | 10°C |
| Inlet Temperature of Heat Transfer Fluid | 25°C |
| Outlet Temperature of Heat Transfer Fluid | 15°C |
| Log Mean Temperature Difference for Evaporator | 9.1°C |

| CONDENSER: | |
|---|---|
| Condenser Temperature: | 42°C |
| Inlet Temperature of Heat Transfer Fluid | 30°C |
| Outlet Temperature of Heat Transfer Fluid | 40°C |
| Log Mean Temperature Difference for Condenser | 5.58°C |
| | |
| Amount of Superheat: | 15°C |
| Amount of Subcooling: | 5°C |
| Isentropic Compressor Efficiency: | 75 % |
| Cooling Duty: | 1 kW |

The results of analysing the performance of the five refrigerant compositions in an air conditioning cycle using these operating conditions are given in Table 1.

The performance parameters of the refrigerant compositions which are presented in Table 1 and in Table 2 which follows, i.e. condenser pressure, evaporator pressure, discharge temperature, refrigeration capacity (by which is meant the cooling duty achieved per unit swept volume of the compressor), coefficient of performance (COP) (by which is meant the ratio of cooling duty achieved to mechanical energy supplied to the compressor), and the glides in the evaporator and condenser (the temperature range over which the refrigerant composition boils in the evaporator and condenses in the condenser), are all art recognised parameters.

The performance of refrigerant R-22 under the same operating conditions is also shown in Table 1 by way of comparison.

It is apparent from Table 1 that the refrigerant compositions of the invention boiled over a wide temperature range in the evaporator and condensed over a wide temperature range in the condenser, i.e. they exhibited wide glide behaviour in both heat exchangers, and that this property enhanced the energy efficiency of the air conditioning cycle as is evident from the higher values recorded for the coefficient of performance in the case of the refrigerant compositions ofthe invention. Table 1 also shows that as the CO₂ concentration increases the temperature glides in the evaporator and condenser also increase and that the energy efficiency (coefficient of performance) reaches a maximum for compositions containing around 5 % by weight CO₂, since such compositions exhibit temperature glides in the evaporator and condenser which closely match the change in temperature experienced by the heat transfer fluid of 10°C at both the evaporator and condenser. It is also apparent from Table 1 that the refrigerant composition of the invention can exhibit a performance in an air conditioning system which, except for the wide glide behaviour and its attendant advantages, is comparable to that of refrigerant R-22.

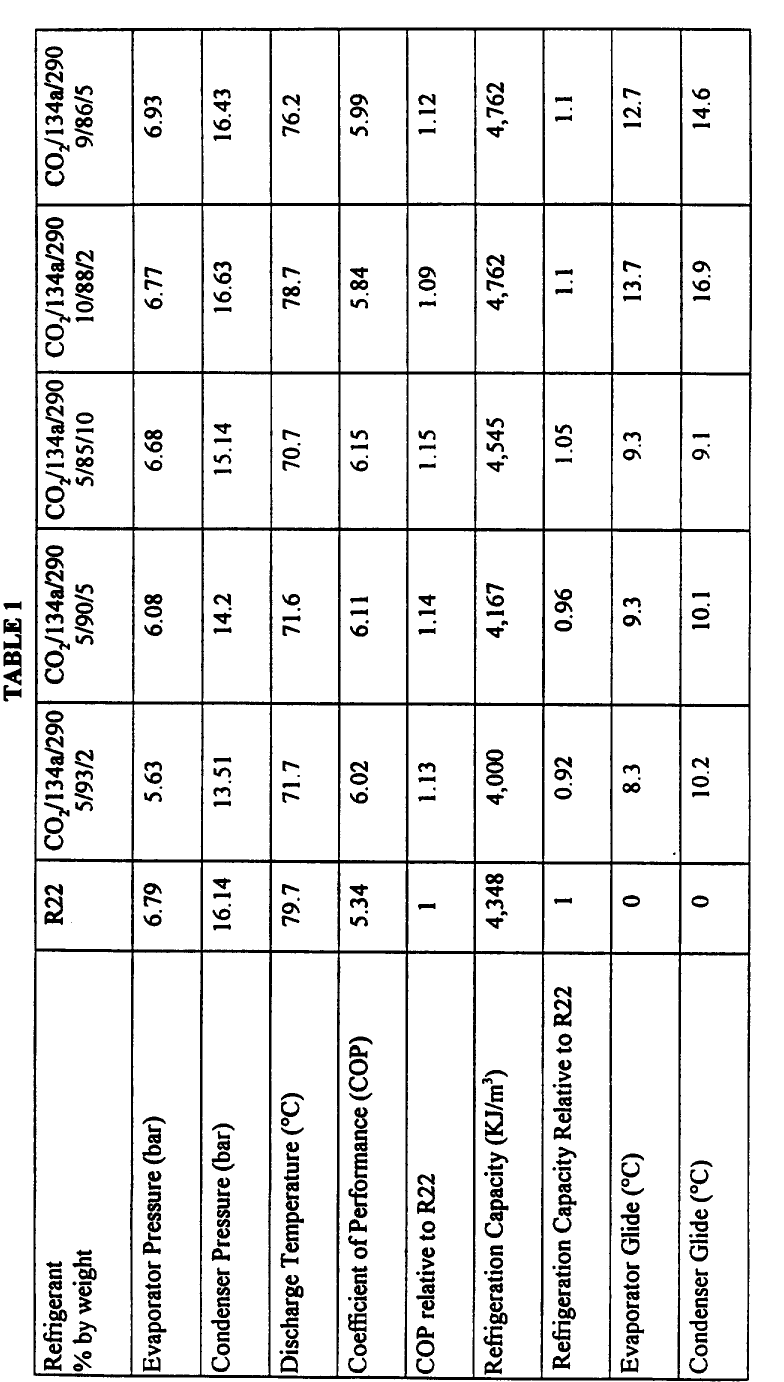

### Example 2

The performance of four refrigerant compositions of the invention in a refrigeration cycle of the type prevailing in an air conditioning system was evaluated using exactly the same technique and exactly the same operating conditions as described in Example 1.

The following refrigerant compositions were subjected to the cycle analysis:
(1) A composition comprising 5 % by weight CO₂, 5 % by weight R-32, 88 % by weight R-134a and 2 % by weight propane (R-290).
(2) A composition comprising 5 % by weight CO₂, 5 % by weight R-32, 86 % by weight R-134a and 4 % by weight propane (R-290).
(3) A composition comprising 5 % by weight CO₂, 5 % by weight R-32, 5 % by weight R-125, 83 % by weight R-134a and 2 % by weight propane (R-290).
(4) A composition comprising 5 % by weight CO₂, 5 % by weight R-32, 5 % by weight R-125, 81 % by weight R-134a and 4 % by weight propane (R-290).
The results of analysing the performance of these four refrigerant compositions in an air conditioning cycle are given in Table 2.

The performance of refrigerant R-22 under the same operating conditions is also shown in Table 2 by way of comparison.

It is apparent from Table 2 that the refrigerant compositions of the invention boiled over a wide temperature range in the evaporator and condensed over a wide temperature range in the condenser, i.e. they exhibited wide glide behaviour in both heat exchangers, and that this property enhanced the energy efficiency of the air conditioning cycle as is evident from the higher values recorded for the coefficient of performance in the case of the refrigerant compositions of the invention. It is also apparent from Table 2 that the refrigerant composition of the invention can exhibit a performance in an air conditioning system which, except for the wide glide behaviour and its attendant advantages, is comparable to that of refrigerant R-22.

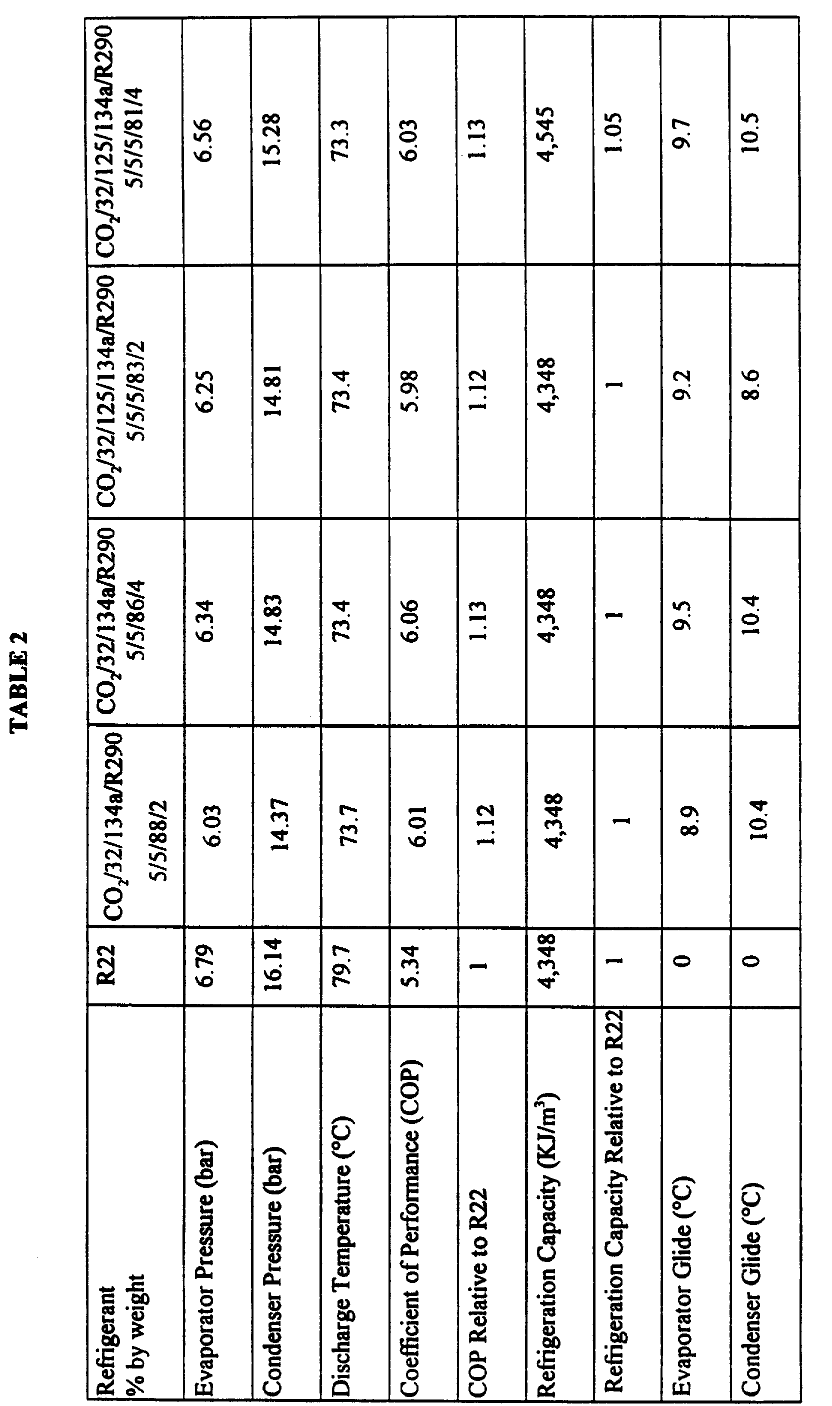

## Claims

1. A non-azeotropic refrigerant composition comprising:
(A) a first component comprising at least one compound selected from the group consisting of carbon dioxide and fluoromethane;
(B) a second component comprising at least one compound selected from the group consisting ofthe hydrofluorocarbons and the hydrofluorocarbon ethers; and
(C) a third component comprising at least one hydrocarbon,
wherein the boiling point of the second component is at least 15°C higher than the sublimation temperature of the carbon dioxide and/or the boiling point of the fluoromethane making up the first component.

2. A non-azeotropic refrigerant composition as claimed in claim 1 wherein the boiling point of the second component is at least 25°C higher than the sublimation temperature of the carbon dioxide and/or the boiling point of the fluoromethane making up the first component.

3. A non-azeotropic refrigerant composition as claimed in claim 1 or claim 2 wherein component (A) is carbon dioxide.

4. A non-azeotropic refrigerant composition as claimed in any one of claims 1 to 3 wherein component (B) comprises at least one hydrofluorocarbon selected from the group consisting of 1,1,1,2-tetrafluoroethane, difluoromethane, pentafluoroethane and 1,1,1-trifluoroethane.

5. A non-azeotropic refrigerant composition as claimed in claim 4 wherein component (B) is 1,1,1,2-tetrafluoroethane or a mixture comprising 1,1,1,2-tetrafluoroethane and at least one of difluoromethane and pentafluoroethane.

6. A non-azeotropic refrigerant composition as claimed in any one of claims 1 to 5 wherein component (C) comprises at least one hydrocarbon containing from 3 to 5 carbon atoms.

7. A non-azeotropic refrigerant composition as claimed in claim 6 wherein component (C) is propane.

8. A non-azeotropic refrigerant composition as claimed in any one of the preceding claims which comprises from 2 to 45 % by weight of component (A), from 45 to 97 % by weight of component (B) and from 1 to 15 % by weight of component (C).

9. A non-azeotropic refrigerant composition as claimed in claim 8 which comprises from 2 to 35 % by weight of component (A), from 60 to 97 % by weight of component (B) and from 1 to 10 % by weight of component (C).

10. A non-azeotropic refrigerant composition as claimed in claim 9 which comprises from 2 to 20 % by weight of component (A), from 70 to 97 % by weight of component (B) and from 1 to 10 % by weight of component (C).

11. A non-azeotropic refrigerant composition as claimed in claim 10 which comprises from 2 to 15 % by weight of component (A), from 75 to 97 % by weight of component (B) and from 1 to 10 % by weight of component (C).

12. A non-azeotropic refrigerant composition as claimed in claim 11 which comprises from 5 to 10 % by weight of component (A), from 85 to 93 % by weight of component (B) and from 2 to 10 % by weight of component (C).

13. The use in a refrigeration or air conditioning system of a non-azeotropic refrigerant composition as claimed in any one of claims 1 to 12.

14. A method for providing cooling which comprises condensing a non-azeotropic refrigerant composition as claimed in any one of claims 1 to 12 and thereafter evaporating it in a heat exchange relationship with a fluid to be cooled.

## Patentansprüche

1. Nicht-azeotrope Kühlmittelzusammensetzung, die aufweist:
(A) einen ersten Bestandteil, der mindestens eine unter Kohlendioxid und Fluormethan ausgewählte Verbindung umfaßt,
(B) einen zweiten Bestandteil, der mindestens eine unter Fluorkohlenwasserstoffen und Fluorkohlenwasserstoffethern ausgewählte Verbindung umfaßt,
(C) einen dritten Bestandteil, der mindestens einen Kohlenwasserstoff umfaßt,
wobei der Siedepunkt des zweiten Bestandteils mindestens 15°C höher ist als die Sublimationstemperatur des Kohlendioxids und/oder der Siedepunkt des Fluormethans, die den ersten Bestandteil bilden.

2. Nicht-azeotrope Kühlmittelzusammensetzung nach Anspruch 1, wobei der Siedepunkt des zweiten Bestandteils mindestens 25°C höher ist als die Sublimationstemperatur des Kohlendioxids und/oder der Siedepunkt des Fluormethans, die den ersten Bestandteil bilden.

3. Nicht-azeotrope Kühlmittelzusammensetzung nach Anspruch 1 oder 2, wobei Bestandteil (A) Kohlendioxid ist.

4. Nicht-azeotrope Kühlmittelzusammensetzung nach einem der Ansprüche 1 bis 3, wobei Bestandteil (B) mindestens einen unter 1,1,1,2-Tetrafluorethan, Difluormethan, Pentafluorethan und 1,1,1-Trifluorethan ausgewählten Fluorkohlenwasserstoff umfaßt.

5. Nicht-azeotrope Kühlmittelzusammensetzung nach Anspruch 4, wobei Bestandteil (B) 1,1,1,2-Tetrafluorethan oder ein Gemisch, das 1,1,1,2-Tetrafluorethan und mindestens eine der Verbindungen Difluormethan und Pentafluorethan enthält, ist.

6. Nicht-azeotrope Kühlmittelzusammensetzung nach einem der Ansprüche 1 bis 5, wobei Bestandteil (C) mindestens einen 3 bis 5 Kohlenstoffatome enthaltenden Kohlenwasserstoff umfaßt.

7. Nicht-azeotrope Kühlmittelzusammensetzung nach Anspruch 6, wobei Bestandteil (C) Propan ist.

8. Nicht-azeotrope Kühlmittelzusammensetzung nach einem der vorhergehenden Ansprüche, die 2 bis 45 Gew.-% Bestandteil (A), 45 bis 97 Gew.-% Bestandteil (B) und 1 bis 15 Gew.-% Bestandteil (C) enthält.

9. Nicht-azeotrope Kühlmittelzusammensetzung nach Anspruch 8, die 2 bis 35 Gew.-% Bestandteil (A), 60 bis 97 Gew.-% Bestandteil (B) und 1 bis 10 Gew.-% Bestandteil (C) enthält.

10. Nicht-azeotrope Kühlmittelzusammensetzung nach Anspruch 9, die 2 bis 20 Gew.-% Bestandteil (A), 70 bis 97 Gew.-% Bestandteil (B) und 1 bis 10 Gew.-% Bestandteil (C) enthält.

11. Nicht-azeotrope Kühlmittelzusammensetzung nach Anspruch 10, die 2 bis 15 Gew.-% Bestandteil (A), 75 bis 97 Gew.-% Bestandteil (B) und 1 bis 10 Gew.-% Bestandteil (C) enthält.

12. Nicht-azeotrope Kühlmittelzusammensetzung nach Anspruch 11, die 5 bis 10 Gew.-% Bestandteil (A), 85 bis 93 Gew.-% Bestandteil (B) und 2 bis 10 Gew.-% Bestandteil (C) enthält.

13. Verwendung einer nicht-azeotropen Kühlmittelzusammen setzung nach einem der Ansprüche 1 bis 12 in einem Kühl- oder Klimatisiersystem.

14. Verfahren zum Kühlen, bei dem eine nicht-azeotrope Kühlmittelzusammensetzung nach einem der Ansprüche 1 bis 12 kondensiert und danach in Wärmeaustauschbeziehung mit einem zu kühlenden Fluid verdampft wird.

## Revendications

1. Composition réfrigérante non azéotropique, qui comprend :
(A) un premier composant comprenant au moins un composé choisi dans le groupe consistant en dioxyde de carbone et fluorométhane ;
(B) un deuxième composant comprenant au moins un composé choisi dans le groupe consistant en les hydrocarbures fluorés et les éthers d'hydrocarbures fluorés ; et
(C) un troisième composant comprenant au moins un hydrocarbure,
dans laquelle le point d'ébullition du deuxième composant est supérieur d'au moins 15°C à la température de sublimation de dioxyde de carbone et/ou au point d'ébullition du fluorométhane constituant le premier composant.

2. Composition réfrigérante non azéotropique suivant la revendication 1, dans laquelle le point d'ébullition du deuxième composant est supérieur d'au moins 25°C à la température de sublimation du dioxyde de carbone et/ou au point d'ébullition du fluorométhane constituant le premier composant.

3. Composition réfrigérante non azéotropique suivant la revendication 1 ou la revendication 2, dans laquelle le composant (A) est le dioxyde de carbone.

4. Composition réfrigérante non azéotropique suivant l'une quelconque des revendications 1 à 3, dans laquelle le composant (B) comprend au moins un hydrocarbure fluoré choisi dans le groupe consistant en le 1,1,1,2-tétrafluoréthane, le difluorométhane, le pentafluoréthane et le 1,1,1-trifluoréthane.

5. Composition réfrigérante non azéotropique suivant la revendication 4, dans laquelle le composant (B) est le 1,1,1,2-tétrafluoréthane ou un mélange comprenant du 1,1,1,2-tétrafluoréthane et au moins l'un du difluorométhane et du pentafluoréthane.

6. Composition réfrigérante non azéotropique suivant l'une quelconque des revendications 1 à 5, dans laquelle le composant (C) comprend au moins un hydrocarbure contenant 3 à 5 atomes de carbone.

7. Composition réfrigérante non azéotropique suivant la revendication 6, dans laquelle le composant (C) est le propane.

8. Composition réfrigérante non azéotropique suivant l'une quelconque des revendications précédentes, qui comprend 2 à 45 % en poids de composant (A), 45 à 97 % en poids de composant (B) et 1 à 15 % en poids de composant (C).

9. Composition réfrigérante non azéotropique suivant la revendication 8, qui comprend 2 à 35 % en poids de composant (A), 60 à 97 % en poids de composant (B) et 1 à 10 % en poids de composant (C).

10. Composition réfrigérante non azéotropique suivant la revendication 9, qui comprend 2 à 20 % en poids de composant (A), 70 à 97 % en poids de composant (B) et 1 à 10 % en poids de composant (C).

11. Composition réfrigérante non azéotropique suivant la revendication 10, qui comprend 2 à 15 % en poids de composant (A), 75 à 97 % en poids de composant (B) et 1 à 10 % en poids de composant (C).

12. Composition réfrigérante non azéotropique suivant la revendication 11, qui comprend 5 à 10 % en poids de composant (A), 85 à 93 % en poids de composant (B) et 2 à 10 % en poids de composant (C).

13. Utilisation, dans un circuit de réfrigération ou de conditionnement d'air, d'une composition réfrigérante non azéotropique suivant l'une quelconque des revendications 1 à 12.

14. Procédé pour produire un refroidissement, qui comprend la condensation d'une composition réfrigérante non azéotropique suivant l'une quelconque des revendications 1 à 12, puis son évaporation en relation d'échange de chaleur avec un fluide devant être refroidi.
